# FASCICULE DE BREVET EUROPEEN

(11) **EP 1 566 522 B1**
(45) Date de publication et mention de la délivrance du brevet: **12.11.2008**
(21) Numéro de dépôt: 05290180.8
(22) Date de dépôt: 27.01.2005
(51) Int. Cl.: F01D 17/16, F02C 3/067, F02K 3/072

(54) **Turboréacteur à double soufflante ayant des aubes directrices à calage variable**
Zweibläser Mantelstromtriebwerk ausgerüstet mit schwenkbaren Leitschaufeln
Double fan turbofan engine having variable fan guide vanes

(30) Priorité: 12.02.2004 FR 0401384
(43) Date de publication de la demande: 24.08.2005
(73) Titulaire: SNECMA, 75015 Paris (FR)
(72) Inventeur: Bart, Jacques, 91370 Verrieres-le-Buisson (FR); Lacorre, Fabienne, 77000 Vaux le Penil (FR); Lebret, Yann, 77950 Maincy (FR); Le Rousseau, Vanessa, 94000 Creteil (FR); Morel, Patrick, 77590 Chartrettes (FR)
(74) Mandataire: Barbin le Bourhis, Joël

(56) Documents cités:
- EP-A- 1 340 903
- GB-A- 2 155 110
- US-A- 4 791 783
- US-A- 4 827 712
- US-A- 5 160 251

## Description

L'invention concerne un turboréacteur triple corps, double flux, à grand taux de dilution, qui comporte, à l'avant d'un carter intermédiaire présentant une grille structurale externe dans la veine du flux secondaire et une grille structurale interne dans la veine du flux primaire, une soufflante avant et une soufflante arrière dont les pales s'étendent radialement vers l'extérieur jusqu'à un carter de soufflante, qui délimite extérieurement la veine du flux secondaire, ainsi qu'un compresseur basse pression destiné à comprimer l'air entrant dans le canal du flux primaire, lesdites soufflantes avant et arrière étant entraînées en rotation directement et séparément par deux arbres coaxiaux.

Dans les turboréacteurs modernes à grand taux de dilution et de forte puissance, la soufflante à un grand diamètre, et la vitesse périphérique en tête de pale est proportionnelle à ce diamètre et à la vitesse de rotation de la soufflante. Or pour obtenir un bon rendement, cette vitesse périphérique doit être inférieure à la vitesse du son. Ceci peut être obtenu dans un turboréacteur classique ayant une seule soufflante, en intercalant un réducteur entre l'arbre d'entraînement et la soufflante. Mais un réducteur entraîne une augmentation appréciable de la masse du moteur et une perte de rendement. Une autre solution consiste à équiper le turboréacteur de deux soufflantes, une soufflante avant et une soufflante arrière, montées à l'avant du carter intermédiaire, qui sont entraînées chacune par un arbre d'entraînement à basse vitesse sans interposition d'un réducteur. Chaque soufflante fournit à l'air circulant dans le canal du flux secondaire, sensiblement la moitié de l'énergie de propulsion du flux secondaire.

L'état de la technique est illustré notamment par US 3 861 139 et US 4 860 537 qui dévoilent des turboréacteurs du type mentionné en introduction, ayant des doubles soufflantes contrarotatives associées à un compresseur basse pression également contrarotatif à double rotor, l'un des rotors étant entraîné par l'arbre d'entraînement de la soufflante avant et l'autre par l'arbre d'entraînement de la soufflante arrière. Le calage fixe des pales des deux soufflantes est calculé afin d'obtenir une adaptation optimale des deux soufflantes à un régime particulier du moteur. Aux autres régimes, il y a obligatoirement une perte de rendement.

Le but de l'invention est de permettre une optimisation de l'adaptation de la soufflante arrière à divers régimes du moteur.

Le but est atteint selon l'invention par le fait que le compresseur basse pression est disposé axialement entre les pales de la soufflante avant et les pales de la soufflante arrière et comporte au moins une couronne d'aubes mobiles qui s'étendent à la périphérie d'une roue entraînée en rotation par l'arbre de la soufflante avant, et au moins deux grilles d'aubes fixes disposées axialement de part et d'autre de ladite couronne d'aubes mobiles et radialement à l'intérieur d'un anneau porte grilles, ledit anneau étant supporté par une grille extérieure disposée dans la veine du flux secondaire et elle-même supportée par le carter de soufflante, et par le fait qu'un stator à calage variable destiné à assurer une adaptation acceptable de la soufflante arrière est disposé en aval de ladite grille extérieure.

Les avantageuses dispositions suivantes sont en outre de préférence adoptées.

La grille extérieure comporte une pluralité de bras radiaux fixes et le stator à calage variable comporte une pluralité de bras radiaux mobiles, susceptibles de pivoter autour d'axes radiaux, chaque bras radial mobile étant disposé immédiatement à l'arrivée d'un bras radial fixe.
- Chaque bras radial mobile comporte un pivot radialement intérieur encastré dans l'anneau porte grilles.
- Chaque bras radial mobile comporte un pivot radialement extérieur encastré dans le carter de soufflante.

Le pivot radialement extérieur est équipé d'un bras de manoeuvre dont l'extrémité libre est articulée sur un anneau de commande.

Très avantageusement, la soufflante avant et la soufflante arrière sont contrarotatives.

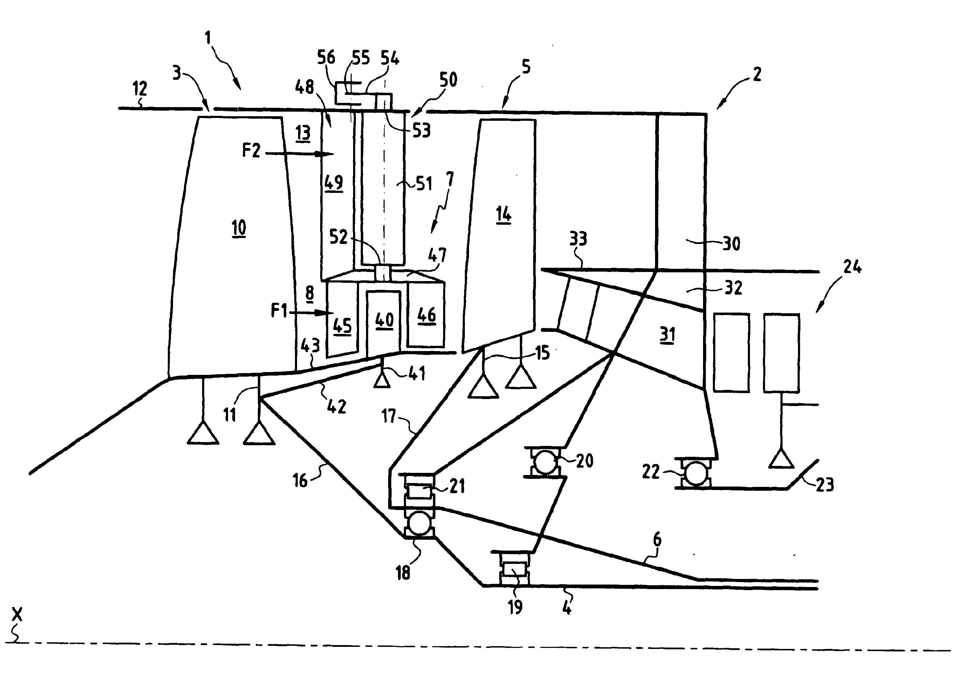

D'autres avantages et caractéristiques de l'invention ressortiront à la lecture de la description suivante faite à titre d'exemple et en référence au dessin annexé dans lequel :

La figure unique est une demi-coupe schématique de l'avant d'un turboréacteur conforme à l'invention.

Le dessin montre schématiquement l'avant 1 d'un turboréacteur d'axe X, qui comporte à l'avant d'un carter intermédiaire 2, une soufflante avant 3 entraînée par un arbre d'entraînement intérieur 4, une soufflante arrière 5 entraînée par un arbre d'entraînement intermédiaire 6 coaxial à l'arbre intérieur 4 et entourant ce dernier, et un compresseur basse pression 7 destiné à comprimer l'air pénétrant dans le canal 8 du flux primaire F1 et disposé axialement entre la soufflante avant 3 et la soufflante arrière 5.

La soufflante avant 3 comporte des pales 10 qui s'étendent à la périphérie d'une roue 11 jusqu'à un carter de soufflante 12 qui délimite extérieurement le canal 13 du flux secondaire F2.

La soufflante arrière 5 comporte également des pales 14 qui s'étendent à la périphérie d'une roue 15 jusqu'au carter de soufflante 12, à travers le canal 8 du flux primaire F1 et le canal 13 du flux secondaire F2.

La roue 11 de la soufflante avant 3 est reliée par un cône 16 à l'arbre intérieur 4, et la roue 15 de la soufflante arrière 5 est reliée par un cône 17 à l'arbre intermédiaire 6.

Une butée inter-arbres 18 et un roulement inter-arbres 19 sont interposés entre l'arbre intérieur 4 et l'arbre intermédiaire 6. L'arbre intermédiaire 6 est supporté par le carter intermédiaire 2 au moyen d'un palier de butée 20 et d'un roulement 21. La référence 22 désigne un palier de butée permettant au carter intermédiaire 2 de supporter l'arbre d'entraînement 23 du compresseur haute pression 24 situé à l'arrière du carter intermédiaire 2.

Le carter intermédiaire 2 présente une grille structurale externe 30 dans la veine du flux secondaire F2 et une grille structurale interne 31 dans la veine du flux primaire F1. La grille structurale externe 30 est reliée extérieurement au carter de soufflante 12. Un caisson annulaire 32 est interposé entre la grille structurale externe 30 et la grille structurale interne 31, en aval d'un bec séparateur 33 du flux primaire F1 et du flux secondaire F2. Ce bec séparateur 33 est lui-même situé en aval des pales 14 de la soufflante arrière 5.

Le compresseur à basse pression 7 est situé entre la soufflante avant 3 et la soufflante arrière 5. Il comporte dans la veine du flux primaire F1 une couronne d'aubes mobiles 40 qui s'étendent à la périphérie d'une roue 41 reliée structurellement au cône 16 par un cône inversé 42 et aux plates-formes des pales 10 de la soufflante avant 3 par un capotage 43 qui délimite intérieurement le canal 8 de flux primaire F1, et deux grilles d'aubes fixes, 45 et 46, disposées axialement de part et d'autre de la couronne d'aubes mobiles 40.

Les deux grilles d'aubes fixes, 45 et 46, s'étendent radialement dans l'alésage d'un anneau porte grilles 47 lui-même supporté par le carter de soufflante 12 par l'intermédiaire d'une grille structurale extérieure 48 dont les bras 49 s'étendent radialement à travers le canal 13 du flux secondaire F2. Les extrémités radialement intérieures des bras 49 sont raccordées à la partie avant de l'anneau porte grilles 47.

Un stator 50 à calage variable est disposé immédiatement en aval de la grille structurale extérieure 48. Ce stator 50 comporte une pluralité de bras radiaux 51 mobiles, de forme aérodynamique, susceptibles de pivoter à l'unisson autour d'axes radiaux et qui s'étendent à travers le canal 13 du flux secondaire F2. Le nombre de bras mobiles 51 est égal au nombre de bras fixes 49 de la grille structurale extérieure 48 et chaque bras mobile 51 est disposé immédiatement en aval d'un bras fixe 49. Chaque bras mobile 51 comporte un pivot radialement intérieur 52 encastré dans l'anneau porte grilles 47, et un pivot radialement extérieur 53 encastré dans le carter de soufflante 12. Les pivots radialement extérieurs 53 sont équipés de bras de manoeuvre 54, dont les extrémités libres 55 sont articulées sur un anneau de commande 56 d'axe X. Le déplacement axial de l'anneau de commande 56 au moyen de vérins, non montrés sur le dessin, entraîne le pivotement de l'ensemble des bras de manoeuvre 54 autour d'axes radiaux définis par les pivots 52 et 53 et le calage du stator 50, en fonction de paramètres de vol et notamment des vitesses de rotation des deux soufflantes 3 et 5 aux différents régimes du moteur.

Le fait que le compresseur à basse pression 7 comporte un stator et un rotor solidaire en rotation de la soufflante avant 3, les deux soufflantes 3 et 5 peuvent tourner dans le même sens. Mais les deux soufflantes 3 et 5 peuvent également être contrarotatives et entraînées par deux rotors de turbine contrarotatives dont les couronnes d'aubes sont imbriquées axialement, ce qui permet de diminuer la longueur de la turbine de travail et sa masse, du fait de l'absence d'un stator de turbine.

## Revendications

1. Turboréacteur triple corps, double flux, à grand taux de dilution, comportant à l'avant d'un carter intermédiaire (2) présentant une grille structurale externe (30) dans la veine du flux secondaire (F2) et une grille structurale interne (31) dans la veine du flux primaire (F1), une soufflante avant (3) et une soufflante arrière (5), dont les pales (10, 14) s'étendent radialement vers l'extérieur jusqu'à un carter de soufflante (12), qui délimite extérieurement la veine du flux secondaire (F2), ainsi qu'un compresseur basse pression (7) destiné à comprimer l'air entrant dans le canal (8) du flux primaire (F1), lesdites soufflantes avant (3) et arrière (5) étant entraînées en rotation directement et séparément par deux arbres coaxiaux (4,6), un compresseur basse pression (7) étant disposé axialement entre les pales (10) de la soufflante avant (3) et les pales (14) de la soufflante arrière (5) et comportant au moins une couronne d'aubes mobiles (40) qui s'étendent à la périphérie d'une roue (41) entraînée en rotation par l'arbre d'entraînement (4) de la soufflante avant (3), **caracterisé par le fait qu'**au moins deux grilles d'aubes fixes (45, 46) sont disposées axialement de part et d'autre de ladite couronne d'aubes mobiles (40) et radialement à l'intérieur d'un anneau porte grilles (47), ledit anneau (47) étant supporté par une grille extérieure (48) disposée dans la veine du flux secondaire (F2) et elle-même supportée par le carter de soufflante (12), et **par le fait qu'**un stator à calage variable (50) destiné à assurer une adaptation acceptable de la soufflante arrière (5) est disposé en aval de ladite grille extérieure (48).

2. Turboréacteur selon la revendication 1, **caractérisé par le fait que** la grille extérieure (48) comporte une pluralité de bras radiaux fixes (49) et le stator à calage variable (50) comporte une pluralité de bras radiaux mobiles (51), susceptibles de pivoter autour d'axes radiaux, chaque bras radial mobile (51) étant disposé immédiatement à l'arrière d'un bras radial fixe (49).

3. Turboréacteur selon la revendication 2, **caractérisé par le fait que** chaque bras radial mobile (51) comporte un pivot radialement intérieur (52) encastré dans l'anneau porte grilles (47).

4. Turboréacteur selon la revendication 3, **caractérisé par le fait que** chaque bras radial mobile (51) comporte un pivot radialement extérieur (53) encastré dans le carter de soufflante (12).

5. Turboréacteur selon la revendication 4, **caractérisé par le fait que** le pivot radialement extérieur (53) est équipé d'un bras de manoeuvre (54) dont l'extrémité libre (55) est articulée sur un anneau de commande (56).

6. Turboréacteur selon l'une quelconque des revendications 1 à 5, **caractérisé par le fait que** la soufflante avant (3) et la soufflante arrière (5) sont contrarotatives.

## Claims

1. A three-spool by-pass turbojet with a high by-pass ratio, the turbojet having a front fan and a rear fan at the front of an intermediate casing (2) that presents an outer structural grid (30) in the by-pass air flow (F2) and an inner structural grid (31) in the main air flow (F1), a front fan (3) and a rear fan (5), the fans having blades (10, 14) that extend radially outwards to a fan casing (12), which fan casing defines the outside of the by-pass air flow (F2), the turbojet also having a low-pressure compressor (7) for compressing the air coming into the channel (8) for the main air flow (F1), said front fan (3) and said rear fan (5) being rotated directly, and separately, by two shafts that are coaxial (4, 6), a low-pressure compressor (7) being disposed axially between the blades (10) of the front fan (3) and the blades (14) of the rear fan (5), and including at least one ring of rotor blades (40) extending from the periphery of a wheel (41) that is driven by the drive shaft (4) for the front fan (3), wherein at least two grids of stator vanes (45, 46) are disposed axially on either side of said ring of rotor blades (40) and radially inside a grid carrier ring (47), said ring (47) being supported by an outer grid (48) that is disposed in the by-pass air flow (F2), said outer grid being supported by the fan casing (12), and wherein a variable-pitch stator (50) is disposed downstream from said outer grid (48) in order to ensure that the rear fan (5) is acceptably matched.

2. A turbojet according to claim 1, wherein the outer grid (48) has a plurality of stationary radial arms (49) and the variable-pitch stator (50) has a plurality of movable radial arms (51), capable of pivoting about radial axes, each movable radial arm (51) being disposed immediately behind a stationary radial arm (49).

3. A turbojet according to claim 2, wherein each movable radial arm (51) has a radially inner hinge (52) embedded in the grid carrier ring (47).

4. A turbojet according to claim 3, wherein each movable radial arm (51) has a radially outer hinge (53) embedded in the fan casing (12).

5. A turbojet according to claim 4, wherein the radially outer hinge (53) is fitted with a drive arm (54), having a free end (55) that is hinged to a control ring (56).

6. A turbojet according to any of claims 1 to 5, wherein the front fan (3) and the rear fan (5) are counter-rotatable fans.

## Patentansprüche

1. Dreiwellen-Zweistromturbostrahltriebwerk mit hohem Nebenstromverhältnis, das am vorderen Teil eines Zwischengehäuses (2), welches ein äußeres Strukturgitter (30) im Kanal des Sekundärstroms (F2) sowie ein inneres Strukturgitter (31) im Kanal des Primärstroms (F1) aufweist, ein vorderes Gebläse (3) und ein hinteres Gebläse (5), deren Schaufeln (10, 14) sich radial nach außen bis zu einem Gebläsegehäuse (12) erstrecken, das den Kanal des Sekundärstroms (F2) außen begrenzt, sowie einen Niederdruckverdichter (7) aufweist, der dazu bestimmt ist, die in den Kanal (8) des Primärstroms (F1) eintretende Luft zu verdichten, wobei das vordere Gebläse (3) und das hintere Gebläse (5) durch zwei koaxiale Wellen (4, 6) direkt und getrennt drehangetrieben werden, wobei ein Niederdruckverdichter (7) zwischen den Schaufeln (10) des vorderen Gebläses (3) und den Schaufeln (14) des hinteren Gebläses (5) axial angeordnet ist und wenigstens einen Kranz mit Laufschaufeln (40) aufweist, die sich am Umfang eines durch die Antriebswelle (4) des vorderen Gebläses (3) drehangetriebenen Rades (41) erstrecken, **dadurch gekennzeichnet, daß** wenigstens zwei Leitschaufelgitter (45, 46) axial auf beiden Seiten des Laufschaufelkranzes (40) sowie radial innerhalb eines Gittertragrings (47) angeordnet sind, wobei der Ring (47) von einem Außengitter (48) getragen wird, das in dem Kanal des Sekundärstroms (F2) angeordnet ist und selbst von dem Gebläsegehäuse (12) getragen wird, und daß ein Stator mit variabler Einstellung (50), der dazu bestimmt ist, eine akzeptable Anpassung des hinteren Gebläses (5) zu gewährleisten, stromabwärts des Außengitters (48) angeordnet ist.

2. Turbostrahltriebwerk nach Anspruch 1, **dadurch gekennzeichnet, daß** das Außengitter (48) eine Vielzahl von festen radialen Armen (49) aufweist und der Stator mit variabler Einstellung (50) eine Vielzahl von beweglichen radialen Armen (51) aufweist, die geeignet sind, um radiale Achse zu schwenken, wobei jeder bewegliche radiale Arm (51) direkt hinter einem festen radialen Arm (49) angeordnet ist.

3. Turbostrahltriebwerk nach Anspruch 2, **dadurch gekennzeichnet, daß** jeder bewegliche radiale Arm (51) eine in den Gittertragring (47) eingelassene radial innere Schwenkachse (52) aufweist.

4. Turbostrahltriebwerk nach Anspruch 3, **dadurch gekennzeichnet, daß** jeder bewegliche radiale Arm (51) eine in das Gebläsegehäuse (12) eingelassene radial äußere Schwenkachse (53) aufweist.

5. Turbostrahltriebwerk nach Anspruch 4, **dadurch gekennzeichnet, daß** die radial äußere Schwenkachse (53) mit einem Betätigungsarm (54) ausgestattet ist, dessen freies Ende (55) an einem Steuerring (56) angelenkt ist.

6. Turbostrahltriebwerk nach einem der Ansprüche 1 bis 5, **dadurch gekennzeichnet, daß** das vordere Gebläse (3) und das hintere Gebläse (5) gegenläufig sind.
